# EUROPEAN PATENT APPLICATION

(11) **EP 3 741 553 A1**
(43) Date of publication of application: **25.11.2020**
(21) Application number: 19826981.3
(22) Date of filing: 26.02.2019
(51) Int. Cl.: B32B 3/12, B29C 70/16, B29C 70/34, B64C 1/00, B64D 45/02, B29K 105/08, B29L 9/00

(54) **COMPOSITE MATERIAL, METHOD FOR MANUFACTURING COMPOSITE MATERIAL, AND METHOD FOR CURING COMPOSITE MATERIAL**

(30) Priority: 28.06.2018 JP 2018123066
(71) Applicant: MITSUBISHI HEAVY INDUSTRIES, LTD., Chiyoda-ku Tokyo 100-8332 (JP)
(72) Inventor: NOMA, Kazuki, Tokyo 100-8332 (JP); AKIYAMA, Hiromichi, Tokyo 100-8332 (JP); KOZASA, Toshio, Tokyo 100-8332 (JP); KANEMASU, Masayuki, Tokyo 100-8332 (JP); MORISHIMA, Shunichi, Tokyo 100-8332 (JP)
(74) Representative: Hoffmann Eitle
(86) International application number: PCT/JP2019/007159
(87) International publication number: WO 2020/003608

(57) **Abstract**

The present invention addresses the problem of providing a composite material that can prevent a strength reduction when fibers of a skin material are bent during curing of the composite material. In a composite material (1), a filler (9) is arranged between a honeycomb core (2) and a first skin material (4) and/or between the honeycomb core (2) and a second skin material (6) so as to overlap the tip of an end of the honeycomb core (2). In a horizontal view, the filler (9) arranged between the honeycomb core (2) and the second skin material (6) protrudes outside the composite material (1) by a length equal to or less than a length of a portion thereof overlapping the tip of the end of the honeycomb core (2).

## Description

### Technical Field

The present invention relates to a composite material, a method for producing a composite material, and a method for curing a composite material.

### Background Art

In recent years, a composite honeycomb sandwich panel exhibiting good strength against bending stress, shear stress, and the like is used as a structural material of an aircraft and the like. The composite honeycomb sandwich panel has a sandwich structure where high-strength skin materials are disposed on upper and lower surfaces of a lightweight core material (honeycomb core). A film adhesive may be used to bond the skin material and the honeycomb core. As an example of such a composite honeycomb sandwich panel, for example, a composite honeycomb sandwich panel described in PTL 1 has been reported.

In order to prevent damage by lightning stroke, in the composite honeycomb sandwich panel used in the aircraft structure, generally, a lightning protection mesh is attached to an aerodynamic surface. In the related art, when the lightning protection mesh is attached to the composite honeycomb sandwich panel, in the composite honeycomb sandwich panel (hereinafter, simply referred to as a "composite material") before curing, the lightning protection mesh and a resin material (for example, a film adhesive (adhesive that integrates the lightning protection mesh with the composite material) or a surface conditioner) are applied to the aerodynamic surface.

### Citation List

### Patent Literature

[PTL 1] US Patent No. 9539769 specification

### Summary of Invention

### Technical Problem

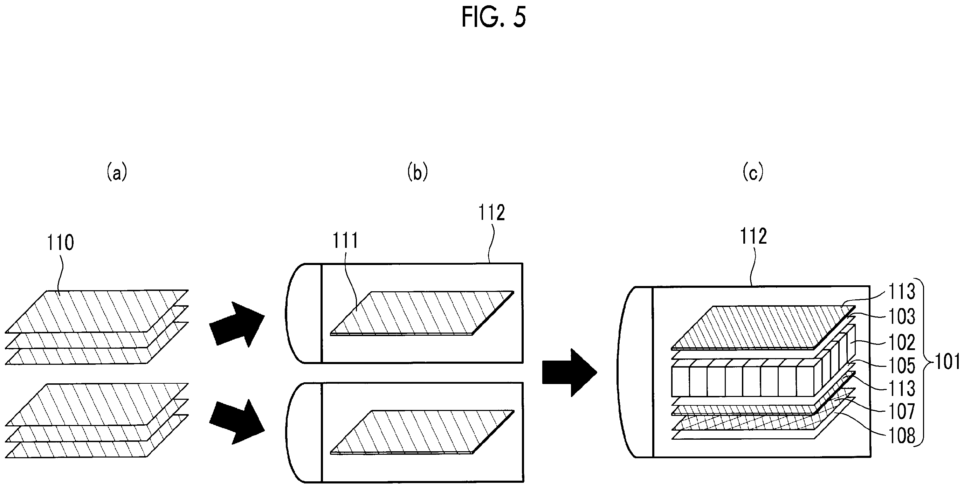

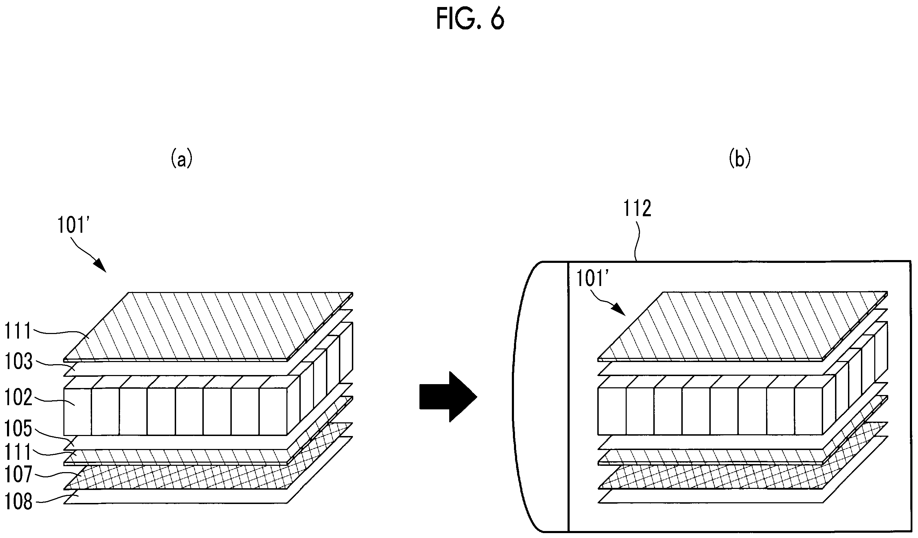

Hereinafter, a method for producing the above composite honeycomb sandwich panel will be described with reference to Figs. 5 and 6. Fig. 5 is a schematic view for describing one example (secondary adhesive molding) of a method for producing a composite honeycomb sandwich panel in the related art. Step (a) of Fig. 5 is a view illustrating a state where prepregs for forming skin materials are prepared, step (b) of Fig. 5 is a view illustrating a state where the laminated prepregs are cured, and step (c) of Fig. 5 is a view illustrating a state where a composite material is cured.

In the production method by the secondary adhesive molding, first, as illustrated in step (a) of Fig. 5, two sets of three prepregs 110 which are two types of upper and lower skin materials are prepared and laminated. Next, as illustrated in step (b) of Fig. 5, the laminated uncured prepregs 111 are each sealed in separate autoclave bags 112 and are cured in an autoclave. As a result, the prepregs are cured, so that two cured prepregs 113 are obtained. In this case, although not illustrated in the drawing, one of the two cured prepregs 113 is cured and integrated with a resin material 108 and a lightning protection mesh 107 to be described later.

Thereafter, the resin material 108, the lightning protection mesh 107, the cured prepreg 113, a second film adhesive 105, a honeycomb core 102, a first film adhesive 103, and the cured prepreg 113 are laminated in order from below to form a composite material 101 (step (c) of Fig. 5). Incidentally, although separately depicted in step (c) of Fig. 5, the resin material 108, the lightning protection mesh 107, and the cured prepreg 113 on the lower side of the drawing sheet in step (c) of Fig. 5 are integrated. The composite material 101 that is obtained is sealed in the autoclave bag 112 and is cured in the autoclave; and thereby, the composite honeycomb sandwich panel can be obtained.

In producing the composite honeycomb sandwich panel, currently, the production method by the secondary adhesive molding as illustrated in Fig. 5 is generally used. However, this production method has a drawback that it is required to operate the autoclave twice or more and thus leading to an increase in cost for curing. Therefore, in order to reduce the number of operations of the autoclave, as illustrated in Fig. 6, one-shot molding by which the autoclave is operated once to produce the composite honeycomb sandwich panel has been attempted. Hereinafter, a method for producing a composite honeycomb sandwich panel by one-shot molding as illustrated in Fig. 6 will be described. Step (a) of Fig. 6 is a view illustrating a state where a composite material is prepared, and step (b) of Fig. 6 is a view illustrating a state where the composite material in step (a) of Fig. 6 is cured.

In the one-shot molding, as illustrated in step (a) of Fig. 6, a composite material 101' obtained by replacing the cured prepreg 113 of the composite material 101 in step (c) of Fig. 5 with an uncured prepreg 111 is prepared. Next, as illustrated in step (b) of Fig. 6, the composite material 101' is sealed in the autoclave bag 112 and is cured in the autoclave. As a result, the composite honeycomb sandwich panel can be produced by operating the autoclave once. Therefore, according to the one-shot molding, in addition to reducing the operation cost of the autoclave, a curing operation with the bag is performed once; and thereby, the molding cost can be reduced. In addition, there is no need to perform a rough trim operation and a jig cleaning operation after the skin is cured, which are required in the secondary adhesive molding.

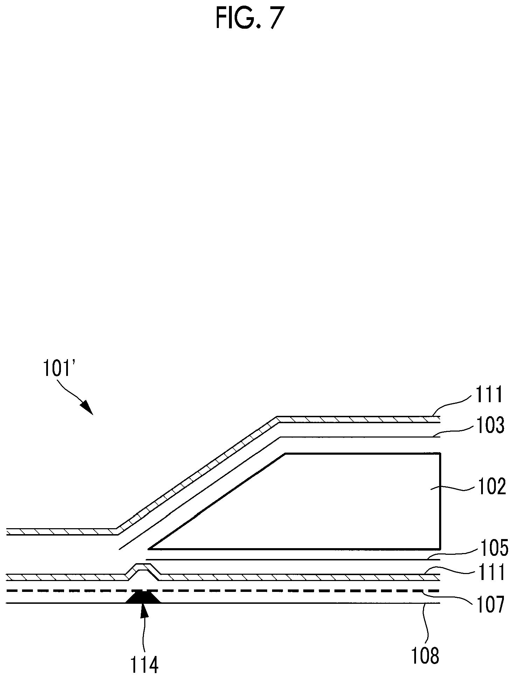

Here, usually, in molding the composite honeycomb sandwich panel, in order to reduce core crash occurring due to pressure being applied to a side surface of the honeycomb core, chamfering is performed to obliquely cut off an end portion of the honeycomb core at an angle of approximately 30°. A case where a composite material including the honeycomb core subjected to such chamfering is molded by one-shot molding will be described below with reference to Fig. 7.

Fig. 7 is a longitudinal cross-sectional view illustrating the state of the vicinity of a tip of the end portion of the honeycomb core when the composite material 101' in step (b) of Fig. 6 is cured. As illustrated in Fig. 7, when the end portion of the honeycomb core 102 is chamfered, the end portion has an inclined shape, and thus as the uncured prepreg 111 approaches the tip of the end portion of the honeycomb core 102, the uncured prepreg 111 is less likely to conform to the shape of the end portion of the honeycomb core 102. In addition, since the end portion of the honeycomb core 102 has an inclined shape, a portion to which the pressure of the autoclave is relatively less likely to be applied occurs at the tip of the end portion. When one-shot molding is performed to form the composite material 101' described above, the resin material 108 disposed in an outermost layer may be accumulated (adhesive accumulation 114 occurs) in a location where the pressure of the autoclave is relatively less likely to be applied to the tip of the honeycomb core 102. When the adhesive accumulation 114 occurs, fibers of the skin material (the uncured prepreg 111 on the lower side of the drawing sheet of Fig. 7) are bent (wrinkled) due to the adhesive accumulation 114, and thus the strength of the obtained composite honeycomb sandwich panel is reduced, which is a problem.

The invention has been made in light of such circumstances, and an object of the invention is to provide a composite material and a method for producing a composite material by which fibers of a skin material can be suppressed from being bent to cause a reduction in strength during curing of the composite material.

### Solution to Problem

In order to solve the above problem, the invention employs the following means.

According to one aspect of the invention, there is provided a composite material including: a honeycomb core; a first skin material disposed on one surface of the honeycomb core to be bonded to the honeycomb core; a second skin material disposed on an opposite surface of the honeycomb core from the one surface to be bonded to the honeycomb core; a lightning protection mesh disposed on an opposite surface of the second skin material from a surface of the second skin material, the surface being bonded to the honeycomb core; and a resin material disposed on an opposite surface of the lightning protection mesh from a second skin material side. A filler is disposed between the honeycomb core and the first skin material, between the honeycomb core and the second skin material, or in both locations so as to overlap a tip of an end portion of the honeycomb core.

In the composite material of the invention, the filler is disposed between the honeycomb core and the first skin material, between the honeycomb core and the second skin material, or in both locations so as to overlap the tip of the end portion of the honeycomb core. In the composite material used in the aircraft structure, the lightning protection mesh and the resin material are generally applied to an aerodynamic surface. In the composite material, particularly when the end portion of the honeycomb core is chamfered, a portion to which the pressure of an autoclave is relatively less likely to be applied occurs at the tip of the end portion. In this state, when the composite material is cured, the resin material (for example, a film adhesive or a surface conditioner) disposed in an outermost layer may be accumulated (adhesive accumulation occurs) in the portion. When the adhesive accumulation occurs, fibers of the skin material are bent (wrinkled) to cause a reduction in strength, which is a concern. Here, as in the invention, when the filler is disposed between the honeycomb core and the first skin material (in a portion above the end portion of the honeycomb core), the pressure of the autoclave is easily transmitted via the filler to the portion where the adhesive accumulation occurs; and thereby, the adhesive accumulation can be suppressed from occurring. When the filler is disposed between the honeycomb core and the second skin material (in a portion below the end portion of the honeycomb core), the rigidity of the filler provides the effect of suppressing adhesive accumulation; and thereby, the skin material can be suppressed from being bent. When the filler is disposed in the composite material in such a manner, during curing of the composite material, the fibers of the skin material can be suppressed from being bent to cause a reduction in strength. Therefore, the composite material of the invention can be suitably used in the aircraft structure.

In the composite material, it is preferable that in a horizontal view, the filler disposed between the honeycomb core and the second skin material protrudes outside the composite material by a length equal to or less than a length of a portion of the filler, the portion overlapping the tip of the end portion of the honeycomb core.

As described above, when the filler is disposed between the honeycomb core and the second skin material, the skin material can be sufficiently suppressed from being bent. Since the size of the filler can be set to an appropriate size, excessive overlapping can be suppressed from occurring in the composite material.

In the composite material, it is preferable that the first film adhesive bonding the first skin material to the honeycomb core is disposed between the first skin material and the honeycomb core, and the second film adhesive bonding the second skin material to the honeycomb core is disposed between the second skin material and the honeycomb core.

As described above, in the invention, two skin materials can be bonded to the honeycomb core by using the film adhesives.

In the composite material, it is preferable that the end portion of the honeycomb core is chamfered so as to be inclined toward the second skin material side.

As described above, in the invention, the end portion of the honeycomb core can be chamfered.

According to another aspect of the invention, there is provided a method for producing a composite material, the method including: a preparation step of preparing a composite material including a honeycomb core, a first skin material disposed on one surface of the honeycomb core to be bonded to the honeycomb core, a second skin material disposed on an opposite surface of the honeycomb core from the one surface to be bonded to the honeycomb core, a lightning protection mesh disposed on an opposite surface of the second skin material from a surface of the second skin material, the surface being bonded to the honeycomb core, and a resin material disposed on an opposite surface of the lightning protection mesh from a second skin material side; and an alignment step of disposing a filler between the honeycomb core and the first skin material, between the honeycomb core and the second skin material, or in both locations so as for the filler to overlap a tip of an end portion of the honeycomb core.

In the method for producing a composite material according to the invention, in the alignment step, the filler is disposed between the honeycomb core and the first skin material, between the honeycomb core and the second skin material, or in both locations so as to overlap the tip of the end portion of the honeycomb core. In the composite material used in the aircraft structure, the lightning protection mesh and the resin material are generally applied to an aerodynamic surface. In the composite material, particularly when the end portion of the honeycomb core is chamfered, a portion to which the pressure of an autoclave is relatively less likely to be applied occurs at the tip of the end portion. In this state, when the composite material is cured, the resin material (for example, a film adhesive or a surface conditioner) disposed in an outermost layer may be accumulated (adhesive accumulation occurs) in the portion. When the adhesive accumulation occurs, fibers of the skin material are bent (wrinkled) to cause a reduction in strength, which is a concern. Here, as in the invention, when the filler is disposed between the honeycomb core and the first skin material (in a portion above the end portion of the honeycomb core), the pressure of the autoclave is easily transmitted via the filler to the portion where adhesive accumulation occurs; and thereby, the adhesive accumulation can be suppressed from occurring. When the filler is disposed between the honeycomb core and the second skin material (in a portion below the end portion of the honeycomb core), the rigidity of the filler provides the effect of suppressing adhesive accumulation; and thereby, the skin material can be suppressed from being bent. When the filler is disposed in the composite material in such a manner, during curing of the composite material, the fibers of the skin material can be suppressed from being bent to cause a reduction in strength. Therefore, the method for producing a composite material in the invention can be suitably used in the aircraft structure.

It is preferable that in the alignment step, in a horizontal view, the filler is disposed between the honeycomb core and the second skin material so as to protrude outside the composite material by a length equal to or less than a length of a portion of the filler, the portion overlapping the tip of the end portion of the honeycomb core.

As described above, when the filler is disposed between the honeycomb core and the second skin material, the skin material can be sufficiently suppressed from being bent. Since the size of the filler can be set to an appropriate size, excessive overlapping can be suppressed from occurring in the composite material.

It is preferable that in the preparation step, the composite material in which the first film adhesive bonding the first skin material to the honeycomb core is disposed between the first skin material and the honeycomb core and the second film adhesive bonding the second skin material to the honeycomb core is disposed between the second skin material and the honeycomb core is prepared.

As described above, in the invention, two skin materials can be bonded to the honeycomb core by using the film adhesives.

It is preferable that in the preparation step, the composite material in which the end portion of the honeycomb core is chamfered so as to be inclined toward the second skin material side is prepared.

As described above, in the invention, the end portion of the honeycomb core can be chamfered.

According to still another aspect of the invention, there is provided a method for curing a composite material, the method including collectively curing the above-described composite material.

Even if the composite material of the invention is collectively cured and molded (one-shot molding), during curing of the composite material, the fibers of the skin material can be sufficiently suppressed from being bent to cause a reduction in strength. Therefore, one-shot molding is performed, and thus in addition to reducing the operation cost of the autoclave, a curing operation with a bag for curing is performed once; and thereby, the molding cost can be reduced. There is no need to perform a rough trim operation and a jig cleaning operation after the skin material is cured, which are required in secondary adhesive molding, and thus the process is simple.

### Advantageous Effects of Invention

According to the composite material and the method for producing a composite material in the invention, during curing of the composite material, the fibers of the skin material can be suppressed from being bent to cause a reduction in strength.

### Brief Description of Drawings

Fig. 1 is a longitudinal cross-sectional view illustrating the state of the vicinity of a tip of an end portion of a honeycomb core when a composite material according to a first embodiment of the invention is cured.
Fig. 2 is a longitudinal cross-sectional view illustrating the state of the vicinity of a tip of an end portion of a honeycomb core when a composite material according to a second embodiment of the invention is cured.
Fig. 3 is a longitudinal cross-sectional view illustrating the state of the vicinity of a tip of an end portion of a honeycomb core when a composite material according to a third embodiment of the invention is cured.
Fig. 4 is a perspective view for describing a configuration of the composite material according to the first embodiment of the invention.
Fig. 5 is a schematic view for describing one example of a method for producing a composite honeycomb sandwich panel in the related art, in which step (a) illustrates a state where prepregs for forming skin materials are prepared, step (b) is a view illustrating a state where the laminated prepregs are cured, and step (c) is a view illustrating a state where a composite material is cured.
Fig. 6 is a schematic view for describing another example of a method for producing a composite honeycomb sandwich panel in the related art, in which step (a) is a view illustrating a state where a composite material is prepared and step (b) is a view illustrating a state where the composite material in step (a) of Fig. 6 is cured.
Fig. 7 is a longitudinal cross-sectional view illustrating the state of the vicinity of a tip of an end portion of a honeycomb core when the composite material in step (b) of Fig. 6 is cured.

### Description of Embodiments

Hereinafter, embodiments of a composite material and a method for producing a composite material according to the invention will be described with reference to the drawings.

### [Composite material]

### [First embodiment]

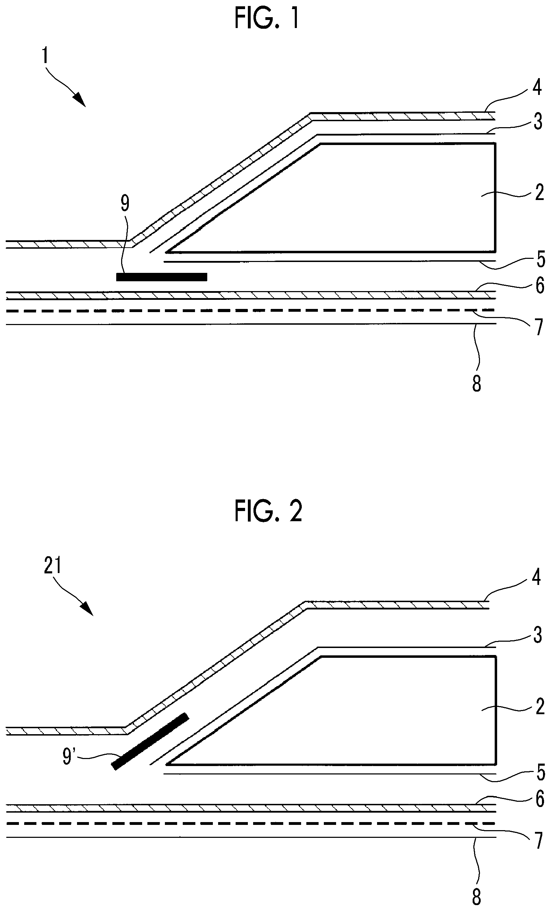

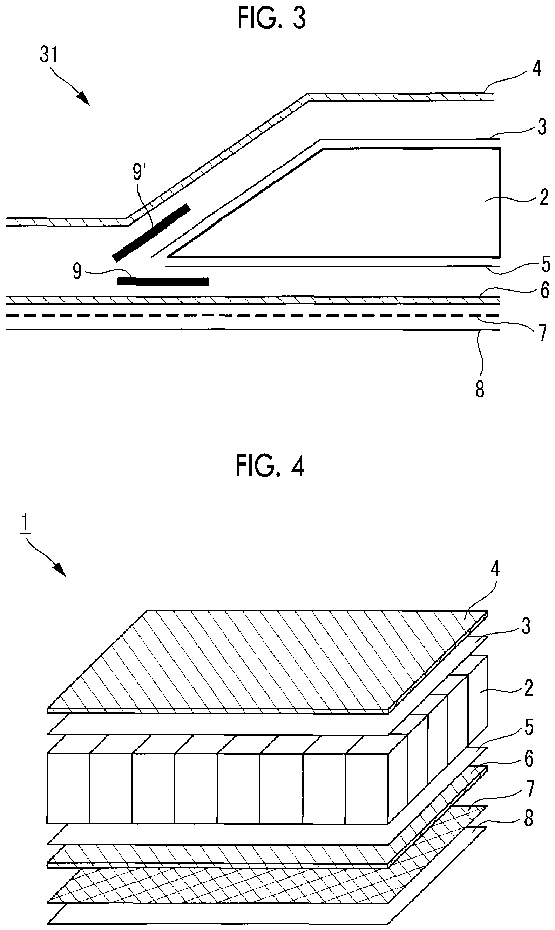

Hereinafter, a composite material according to a first embodiment of the invention will be described with reference to Figs. 1 and 4.

Fig. 4 is a perspective view for describing a configuration of the composite material according to the present embodiment.

As illustrated in Fig. 4, a composite material 1 according to the present embodiment includes a honeycomb core 2, a first film adhesive 3, a first skin material 4, a second film adhesive 5, a second skin material 6, a lightning protection mesh 7, and a resin material 8. Specifically, the first film adhesive 3 is disposed on one surface (upper surface) of the honeycomb core 2, and the first skin material 4 is bonded to the honeycomb core 2 via the first film adhesive 3. Meanwhile, the second film adhesive 5 is disposed on an opposite surface (lower surface) of the honeycomb core 2 from the one surface, and the second skin material 6 is bonded to the honeycomb core 2 via the second film adhesive 5. Then, the lightning protection mesh 7 is disposed on an opposite surface of the second skin material 6 from a surface of the second skin material 6, the surface being bonded to the honeycomb core 2, and the resin material 8 is disposed on an opposite surface of the lightning protection mesh 7 from a second skin material 6 side. Examples of the resin material 8 include a film adhesive and a surface conditioner.

An end portion of the honeycomb core 2 is, as will be described later, chamfered so as to be inclined toward the second skin material 6 side. The first skin material 4 and the second skin material 6 are, for example, a plurality of laminated uncured prepregs.

Next, the configuration of the vicinity of a tip of the end portion of the honeycomb core 2 in the composite material 1 according to the present embodiment will be specifically described with reference to Fig. 1. Fig. 1 is a longitudinal cross-sectional view illustrating the state of the vicinity of the tip of the end portion of the honeycomb core 2 when the composite material 1 according to the present embodiment is cured. As illustrated in Fig. 1, the end portion of the honeycomb core 2 is chamfered so as to be inclined, for example, at 30° toward the second skin material 6 side. Then, a filler 9 is disposed between the second film adhesive 5 and the second skin material 6 so as to overlap the tip of the chamfered end portion of the honeycomb core 2. Specifically, in a horizontal view, the filler 9 disposed between the second film adhesive 5 and the second skin material 6 protrudes outside the composite material 1 (particularly, the tip of the end portion of the honeycomb core 2) by a length equal to or less than the length of a portion of the filler 9, the portion overlapping the tip of the end portion of the honeycomb core 2.

The material of the filler 9 is not particularly limited, and composite materials (for example, carbon fiber reinforced plastics (CFRP), glass fiber reinforced plastics (GFRP), and the like), film adhesives, resin materials, and the like can be provided as examples of the material. The curing state of the filler 9 may be a cured state or an uncured state. The number of laminated layers (ply number) of the filler 9 is determined according to the height of an adhesive accumulation that is expected to occur, and when the thickness of the filler 9 is 0.3 mm/ply or less, approximately one to three plies are desirable. When a plurality of the fillers 9 are applied in a laminated manner, the lengths of the plies may be the same or different.

According to the present embodiment with the above-described configuration, the following effects are obtained.

In the composite material 1 of the present embodiment, the filler 9 is disposed between the honeycomb core 2 and the second skin material 6 so as to overlap the tip of the end portion of the honeycomb core 2. As in the present embodiment, when the filler 9 is disposed between the honeycomb core 2 and the second skin material 6 (in a portion below the end portion of the honeycomb core 2), the rigidity of the filler 9 provides the effect of suppressing the adhesive accumulation; and thereby, the skin material (second skin material 6) can be suppressed from being bent. When the filler 9 is disposed in the composite material 1 in such a manner, during curing of the composite material 1, fibers of the second skin material 6 can be suppressed from being bent to cause a reduction in strength. Therefore, the composite material 1 of the present embodiment can be suitably used in the aircraft structure.

In the present embodiment, in a horizontal view, the filler 9 protrudes outside the composite material 1 by a length equal to or less than the length of the portion of the filler 9, the portion overlapping the tip of the end portion of the honeycomb core 2. When the filler 9 is disposed in such a manner, the second skin material 6 can be sufficiently suppressed from being bent. Since the size of the filler 9 can be set to an appropriate size, excessive overlapping can be suppressed from occurring in the composite material 1.

Incidentally, in the first embodiment described above, the case where in a horizontal view, the filler 9 protrudes outside the composite material 1 by a length equal to or less than the length of the portion of the filler 9, the portion overlapping the tip of the end portion of the honeycomb core 2, has been described as an example; however, the invention is not limited thereto. Specifically, as long as the filler 9 overlaps the vicinity of the tip of the end portion of the honeycomb core 2, in which the adhesive accumulation occurs, the length of the filler 9 is not particularly limited.

### [Second embodiment]

Next, a second embodiment of the invention will be described with reference to Fig. 2.

The basic configuration of the present embodiment is basically the same as that of the first embodiment; however, the present embodiment differs from the first embodiment in that instead of the filler 9, a filler 9' is disposed between the first film adhesive 3 and the first skin material 4. Therefore, in the present embodiment, the different part will be described and the description of other duplicate parts will be omitted.

Incidentally, the same reference signs are assigned to the same components as those of the first embodiment and duplicate descriptions will be omitted.

Fig. 2 is a longitudinal cross-sectional view illustrating the state of the vicinity of the tip of the end portion of the honeycomb core 2 when a composite material 21 according to the present embodiment is cured. In the composite material 21 according to the present embodiment, the filler 9' is disposed between the first film adhesive 3 and the first skin material 4 so as to overlap the tip of the chamfered end portion of the honeycomb core 2. Incidentally, the filler 9' may be the same as the filler 9 in the first embodiment described above.

According to the present embodiment with the above-described configuration, the following effects are obtained.

In the composite material 21 of the present embodiment, the filler 9' is disposed between the honeycomb core 2 and the first skin material 4 so as to overlap the tip of the end portion of the honeycomb core 2. As in the present embodiment, when the filler 9' is disposed between the honeycomb core 2 and the first skin material 4 (in a portion above the end portion of the honeycomb core 2), the pressure of an autoclave is easily transmitted via the filler 9' to a portion where adhesive accumulation occurs. As a result, the adhesive accumulation can be suppressed from occurring. When the filler 9' is disposed in the composite material 21 in such a manner, during curing of the composite material 21, the fibers of the second skin material 6 can be suppressed from being bent to cause a reduction in strength. Therefore, the composite material 21 of the present embodiment can be suitably used in the aircraft structure.

### [Third embodiment]

Next, a third embodiment of the invention will be described with reference to Fig. 3.

The basic configuration of the present embodiment is basically the same as that of the first embodiment; however, the present embodiment differs from the first embodiment in that in addition to the filler 9, the filler 9' of the second embodiment is also disposed. Therefore, in the present embodiment, the different part will be described and the description of other duplicate parts will be omitted.

Incidentally, the same reference signs are assigned to the same components as those of the second embodiment and duplicate descriptions will be omitted.

Fig. 3 is a longitudinal cross-sectional view illustrating the state of the vicinity of the tip of the end portion of the honeycomb core 2 when a composite material 31 according to the present embodiment is cured. In the composite material 31 according to the present embodiment, the filler 9' and 9 are disposed between the first film adhesive 3 and the first skin material 4 and between the second film adhesive 5 and the second skin material 6, respectively.

According to the present embodiment with the above-described configuration, the following effects are obtained.

In the composite material 31 of the present embodiment, the filler 9' and 9 are disposed both between the honeycomb core 2 and the first skin material 4 and between the honeycomb core 2 and the second skin material 6 so as to overlap the tip of the end portion of the honeycomb core 2. As in the present embodiment, when the filler 9 is disposed between the honeycomb core 2 and the first skin material 4 (in a portion above the end portion of the honeycomb core 2), the pressure of the autoclave is easily transmitted via the filler 9 to a portion where adhesive accumulation occurs. As a result, the adhesive accumulation can be suppressed from occurring. When the filler 9' is disposed between the honeycomb core 2 and the second skin material 6 (in a portion below the end portion of the honeycomb core 2), the rigidity of the filler 9' provides the effect of suppressing the adhesive accumulation; and thereby, the second skin material 6 can be suppressed from being bent. When the fillers 9 and 9' are disposed in the composite material 31 in such a manner, during curing of the composite material 31, the fibers of the second skin material 6 can be suppressed from being bent to cause a reduction in strength. Therefore, the composite material 31 of the present embodiment can be suitably used in the aircraft structure.

The composite material of the invention as described above can be collectively cured. Even if the composite material of the invention is collectively cured and molded (one-shot molding), during curing of the composite material, the fibers of the skin material can be sufficiently suppressed from being bent to cause a reduction in strength. Therefore, one-shot molding is performed, and thus in addition to reducing the operation cost of the autoclave, a curing operation with a bag for curing is performed once; and thereby, the molding cost can be reduced. There is no need to perform a rough trim operation and a jig cleaning operation after the skin material is cured, which are required in secondary adhesive molding, and thus the process is simple.

The composite material of the invention as described above is suitably applicable to products, such as a control surface structure for future commercial aircrafts, a panel for future helicopters and space shuttles, aircraft floor materials, floor materials and frame materials for new transportation and railway vehicles, which require a lightweight and high-rigidity composite honeycomb sandwich panel.

### [Method for producing composite material]

Next, one embodiment of a method for producing a composite material in the invention will be described.

The method for producing a composite material in the invention includes a preparation step and an alignment step. In the preparation step, the above-described composite material of the invention is prepared. In the alignment step, a filler is disposed between the honeycomb core and the first skin material, between the honeycomb core and the second skin material, or in both locations so as to overlap the tip of the end portion of the honeycomb core.

Incidentally, hereinafter, a case where the method for producing a composite material in the invention is applied to producing the composite material 1 illustrated in Figs. 1 and 4 will be described as one example; however, the invention is not limited thereto.

### (Preparation step)

In the preparation step, the composite material 1 of the first embodiment described above is prepared. Here, as one example, the composite material 1 illustrated in Fig. 4 is prepared and the following step is performed.

### (Alignment step)

In the alignment step, as illustrated in Fig. 1, the filler 9 is disposed between the second film adhesive 5 and the second skin material 6 so as to overlap the tip of the chamfered end portion of the honeycomb core 2.

In the alignment step, specifically, as illustrated in Fig. 1, in a horizontal view, the filler 9 is disposed between the second film adhesive 5 and the second skin material 6 so as to protrude outside the composite material 1 by a length equal to or less than the length of a portion of the filler 9, the portion overlapping the tip of the end portion of the honeycomb core 2.

According to the present embodiment with the above-described configuration, the following effects are obtained.

In the method for producing the composite material 1 of the present embodiment, in the alignment step, the filler 9 is disposed between the honeycomb core 2 and the second skin material 6 so as to overlap the tip of the end portion of the honeycomb core 2. As in the present embodiment, when the filler 9 is disposed between the honeycomb core 2 and the second skin material 6 (in a portion below the end portion of the honeycomb core 2), the rigidity of the filler 9 provides the effect of suppressing the adhesive accumulation; and thereby, the skin material (second skin material 6) can be suppressed from being bent. When the filler 9 is disposed in the composite material 1 in such a manner, during curing of the composite material 1, the fibers of the second skin material 6 can be suppressed from being bent to cause a reduction in strength. Therefore, the method for producing the composite material 1 of the present embodiment can be suitably used in the aircraft structure.

Incidentally, in one embodiment of the method for producing a composite material in the invention described above, the case where the filler 9 is provided between the second film adhesive 5 and the second skin material 6 has been described as an example; however, the invention is not limited thereto. As illustrated in Fig. 2, the filler 9' may be provided only between the first film adhesive 3 and the first skin material 4 or as illustrated in Fig. 3, the fillers 9' and 9 are disposed both between the first film adhesive 3 and the first skin material 4 and between the second film adhesive 5 and the second skin material 6, respectively. In addition, the invention is not limited to the modes.

In the composite material and one embodiment of the method for producing a composite material in the invention described above, the case where the first film adhesive 3 and the second film adhesive 5 are used has been described as one example; however, a mode where the two film adhesives are not used may be adopted. In such a case, since the film adhesives are not required, the cost can be lowered. In addition, also in the mode where the above two film adhesives are not used, molding can be performed by one-shot molding. In this case, the two skin materials (uncured prepregs) are directly bonded to the honeycomb core.

In the composite material and one embodiment of the method for producing a composite material in the invention described above, the case where the end portion of the honeycomb core 2 is chamfered has been described as one example; however, chamfering may not be performed. Also when the honeycomb core is not chamfered, above-described adhesive accumulation is expected to occur; however, when the filler is provided as described above, such adhesive accumulation can be prevented from occurring.

### Reference Signs List

- 1, 21, 31:: Composite material
- 2:: Honeycomb core
- 3:: First film adhesive
- 4:: First skin material
- 5:: Second film adhesive
- 6:: Second skin material
- 7:: Lightning protection mesh
- 8:: Resin material
- 9, 9':: Filler

## Claims

1. A composite material comprising:
a honeycomb core;
a first skin material disposed on one surface of the honeycomb core to be bonded to the honeycomb core;
a second skin material disposed on an opposite surface of the honeycomb core from the one surface to be bonded to the honeycomb core;
a lightning protection mesh disposed on an opposite surface of the second skin material from a surface of the second skin material, the surface being bonded to the honeycomb core; and
a resin material disposed on an opposite surface of the lightning protection mesh from a second skin material side,
wherein a filler is disposed between the honeycomb core and the first skin material, between the honeycomb core and the second skin material, or in both locations so as to overlap a tip of an end portion of the honeycomb core.

2. The composite material according to claim 1,
wherein in a horizontal view, the filler disposed between the honeycomb core and the second skin material protrudes outside the composite material by a length equal to or less than a length of a portion of the filler, the portion overlapping the tip of the end portion of the honeycomb core.

3. The composite material according to claim 1 or 2, wherein a first film adhesive bonding the first skin material to the honeycomb core is disposed between the first skin material and the honeycomb core, and
a second film adhesive bonding the second skin material to the honeycomb core is disposed between the second skin material and the honeycomb core.

4. The composite material according to any one of claims 1 to 3,
wherein the end portion of the honeycomb core is chamfered so as to be inclined toward the second skin material side.

5. A method for producing a composite material, the method comprising:
a preparation step of preparing a composite material including a honeycomb core, a first skin material disposed on one surface of the honeycomb core to be bonded to the honeycomb core, a second skin material disposed on an opposite surface of the honeycomb core from the one surface to be bonded to the honeycomb core, a lightning protection mesh disposed on an opposite surface of the second skin material from a surface of the second skin material, the surface being bonded to the honeycomb core, and a resin material disposed on an opposite surface of the lightning protection mesh from a second skin material side; and
an alignment step of disposing a filler between the honeycomb core and the first skin material, between the honeycomb core and the second skin material, or in both locations so as for the filler to overlap a tip of an end portion of the honeycomb core.

6. The method for producing a composite material according to claim 5,
wherein in the alignment step, in a horizontal view, the filler is disposed between the honeycomb core and the second skin material so as to protrude outside the composite material by a length equal to or less than a length of a portion of the filler, the portion overlapping the tip of the end portion of the honeycomb core.

7. The method for producing a composite material according to claim 5 or 6,
wherein in the preparation step, the composite material in which a first film adhesive bonding the first skin material to the honeycomb core is disposed between the first skin material and the honeycomb core and a second film adhesive bonding the second skin material to the honeycomb core is disposed between the second skin material and the honeycomb core is prepared.

8. The method for producing a composite material according to any one of claims 5 to 7,
wherein in the preparation step, the composite material in which the end portion of the honeycomb core is chamfered so as to be inclined toward the second skin material side is prepared.

9. A method for curing a composite material, the method comprising:
collectively curing the composite material according to any one of claims 1 to 4.
